**Europäisches Patentamt**

**European Patent Office**

**Office européen des brevets**

(19)

(11) Publication number: **0 104 709**
**A2**

(12)

# EUROPEAN PATENT APPLICATION

(21) Application number: **83201365.0**

(22) Date of filing: **26.09.83**

(51) Int. Cl.³: **G 06 F 15/02**

(30) Priority: **29.09.82 NL 8203761**

(43) Date of publication of application:
**04.04.84 Bulletin 84/14**

(84) Designated Contracting States:
**DE FR GB IT**

(71) Applicant: **Van Dalen, Johannes**
**Landréstraat 422**
**NL-2551 CC 's-Gravenhage(NL)**

(71) Applicant: **Van Dalen, Hendrik**
**Elisabethstraat 24**
**NL-6161 GT Geleen(NL)**

(72) Inventor: **Van Dalen, Hendrik**
**24 Elisabethstraat**
**NL-6161 GT Geleen(NL)**

(74) Representative: **van Dun, Frans Willem Pieter**
**Aart van der Leeuwlaan 225**
**NL-2624 PR Delft(NL)**

(54) Portable device including manual operation via a plurality of keys.

(57) Portable device including manual operation via a plurality of keys to input characters on the basis of the principle of combination wherein the keys in an ergonomically fitted way are arranged such that the device is adapted to be both supported and operated by one hand. The device may be a round/oval/eggshaped tabloid, fanshaped or cylindrical pocket calculator, or the receiver of a telephone set.

FIG.1

Portable device including manual operation via a plurality of keys.

The invention relates to a portable device including manual operation via a plurality of keys to input characters on the basis of the principle of combination as disclosed in the Dutch patent application 7901432.

The advantages of keys operating on the basis of the principle of combination or "chords" are that, the number of keys may, substantially, be decreased whereby the device may have a smaller size, and by a suitable positioning of the keys it is possible to have the hand operating the device stay in one single position and the operation take place "blindly" whereby the attention may be directed elsewhere and illumination of the keys is not ncessary.

The known device is a word processor which only needs a number of five keys as $(2^5-1)=31$ combinations may be formed therewith which is sufficient for the twenty six letters of the alphabet. Further examples of similar devices are pocket calculators, the receiver of a telephone set or the set itself when the receiver and the set are formed integrally, in future to be expected portable devices having keys as input arrangement for a typewriter and connected thereto by a wire, a memory or wireless, etc.

The term"a plurality of keys" means any array of on-out-entry controls for inputting characters including push buttons, tumbler switches, tip keys, light keys, etc.

Operation of a plurality of keys operating on the basis of the principle of combination or "chords" seems to be possible already after a short time practicing as mentioned in the paper "A research center for augmenting human intellect" of the "Fall joint computer conference", pages 395-410 of 1968. According to said paper the time of practicing is about five hours only.

As disadvantage of the device defined in the preamble is felt that, two hands are needed for operation, viz. one for supporting the device and the other one for operation, or the device has to be placed  upon a support if it has to be possible to keep free one hand for other purposes.

The invention intends to eliminate said disadvantage.

That is achieved by having thekeys arranged in an ergonomically fitted way such that the device is adapted to be both supported and operated by one hand.

Preferably, when the device is constituted by a pocket calculator having a reading window at the front, it presents a generally rectangular shape, the keys being arranged at the sides.

Further, a convenient embodiment is provided by the calculator having a round /.oval/ egg shaped tabloid form having the reading window in its middle.

Another advantageous embodiment of the pocket calculator presents a fanshaped form having the reading window in its middle.

Finally, an advantageous embodiment of the pocket calculator is provided in the shape of a cylinder having the keys on its shell and the reading window at the top.

It is preferred, when the device is comprised by a telephone set, that the keys are arranged on the receiver whereby bad seeing and blind persons may dial a telephone number also.

Preferably, means are provided for securing the device to the body. Examples of such means are a collar for carrying the device on the chest, a wristlet, a fingerband, a clip on the clothes, etc.

Finally, when the device serves as input for a typewriter, it is convenient that the device is in the form of a grip designed as joy stick rotatable over a small angle in opposite directions from a neutral position and attached to the wrist of the hand.

The invention is further explained with reference to the drawings, in which:

Fig. 1 shows a pocket calculator having keys arranged in aan ergonomically fitted way,

Fig 2 shows a second embodiment of the pocket calculator,

Fig 3 shows a third embodiment of the pocket calculator, and

Fig 4 shows a fourth embodiment of the pocket calculator.

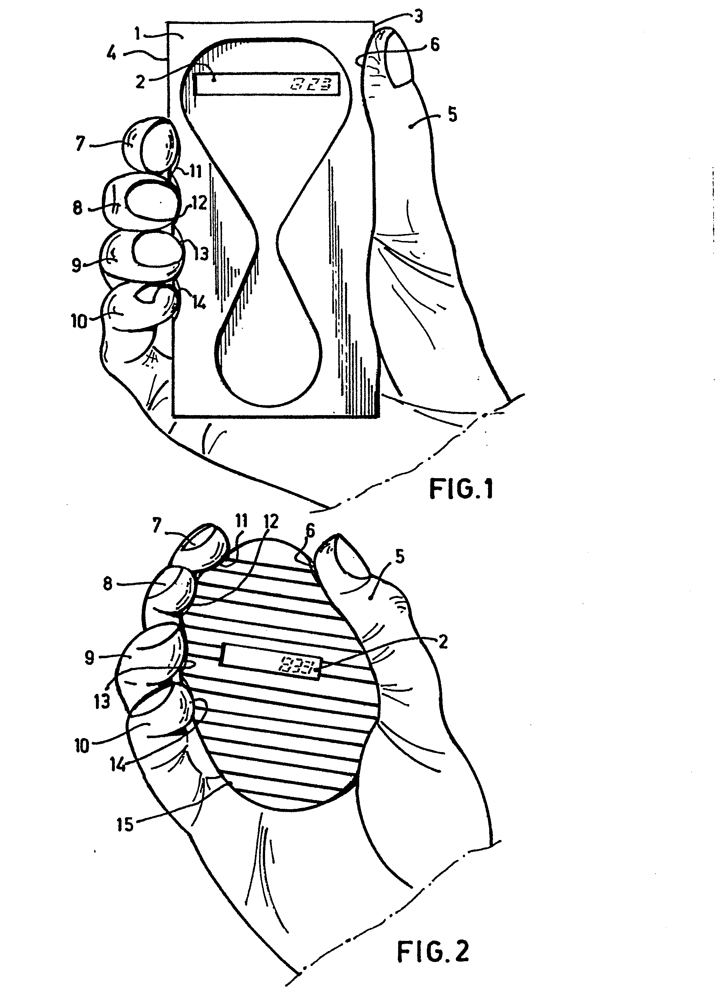

The embodiment of the pocket calculator 1 illustrated in fig. 1 presents a substantially rectangular shape having a reading window 2 in one face. Here, the keys are arranged in an ergonomically fitted way on the two long sides 3 and 4 such that the thumb 5 of the hand is enabled to operate a key 6 on the side 3 and the remaining four fingers 7-10 associated keys 11-14 on the side 4. ln this way it is possible to support and operate the calculator with one hand. It will be appreciated that it is possible, as needed, to decrease or to extend the number of possible combinations or "chords" by respectively increasing or increasing the number of keys; in the latter case for example by having the thumb 5 operate two keys.

Fig. 2 shows an embodiment of the pocket calculator 1 which presents a round /oval/ egg shaped form having the reading window 2 in its middle. Here, the keys 6 and 11-14 are arranged in the periphery 15 of the calculator such that they may be operated respectively by the thumb 5 and the remaining fingers 7-10 of the hand.

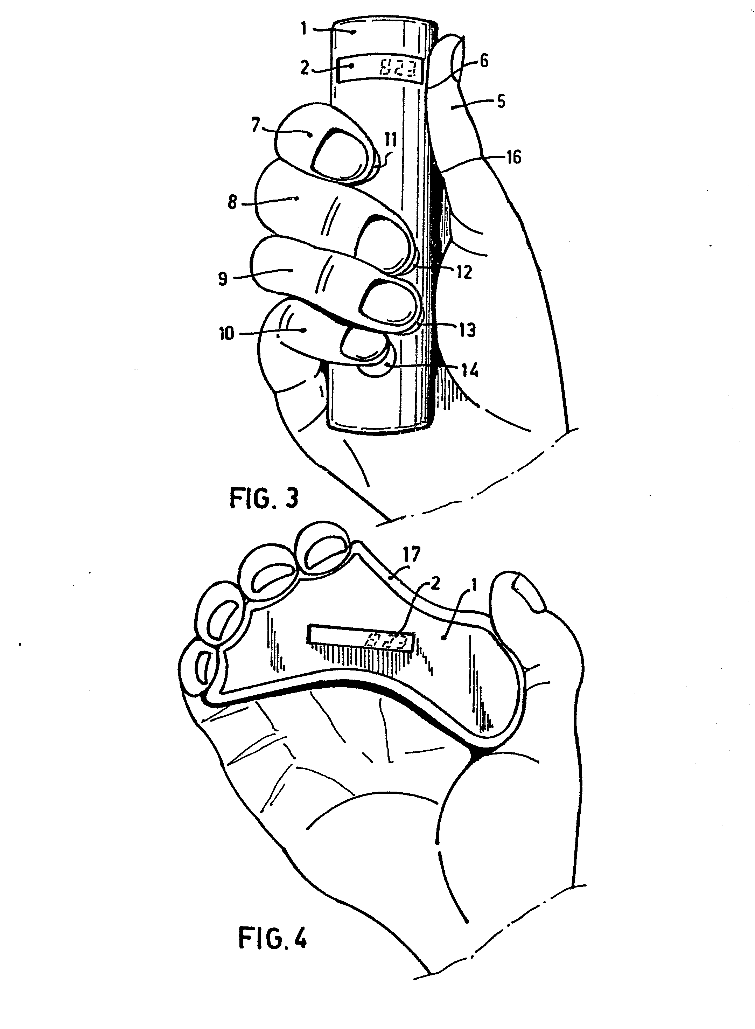

In fig. 3 an embodiment of the pocket calculator 1 is illustrated which is in the form of a cylinder having the reading window 2 at the top, the keys 6 and 11-14 being arranged on the shell 16 of the cylinder below said window such that they may be operated respectively by the thumb 5 and the remaining fingers of the hand.

Finally, in fig. 4, yet another embodiment of the pocket calculator 1 is shown in the shape of a fan having the reading window 2 in its middle, the keys 6 and 11-14, again, being arranged in the periphery 17 in the way discussed with the above embodiments.

In some cases an attachment band about the thumb may improve comfort of operation.

The device, also, may be designed as an in future to be expected portable device having a plurality of keys as input for a typewriter and connected thereto by a wire, a memory or wireless, in which case the device, preferably, presents the form of a grip designed as joy stick rotatable over a small angle in opposite directions from a neutral position and attached to the wrist of the hand for example by a wristlet.

Starting from the current typewriters at least eighty characters are required, viz. twenty six letters and capitals, ten figures, punctuation marks and the like.

In the embodiment described as rotatable grip having five keys $3 \times (2^5-1)=95$ combinations are possible so that the requirement of eighty characters may amply be met.

## Claims

1. Portable device including manual operation via a plurality of keys to input characters on the basis of the principle of combination, characterized in that the keys in an ergonomically fitted way are arranged such that the device is adapted to be both supported and operated by one hand.

2. Device according to claim 1 and comprising a pocket calculator having a reading window at the top, characterized in that the calculator presents a generally rectangular shape, the keys being provided on the sides.

3. Device according to claim 2, characterized in that the calculator presents a round /oval/ eggshaped tabloid form having the reading window in its middle.

4. Device according to claim 2, characterized in that the calculator has a fanshaped form having the reading window in its middle.

5. Device according to claim 1 and comprising a pocket calculator is in the form of a cylinder having the keys on the shell and the reading window at the top.

6. Device according to claim 1 and comprising a telephone set, characterized in that the keys are arranged on the receiver.

7. Device according to any preceeding claim, characterized in that means are provided for attaching the device to the body.

8. Device according to claim 1 and serving as input for a typewriter, characterized in that the device is in the form of a grip designed as joy stick rotatable over a small angle in opposite directions from a neutral position and secured to the wrist of the hand.

FIG.1

FIG.2

FIG. 3

FIG. 4